# EUROPEAN PATENT SPECIFICATION

(11) **EP 1 641 618 B1**
(45) Date of publication and mention of the grant of the patent: **14.05.2014**
(21) Application number: 04735537.5
(22) Date of filing: 31.05.2004
(51) Int. Cl.: B32B 37/00, B27D 5/00, B29C 63/00

(54) **An edge banding apparatus**
Konturkantenverleimungsvorrichtung
Dispositif de cerclage de contour

(30) Priority: 30.05.2003 NZ 52636003
(43) Date of publication of application: 05.04.2006
(73) Proprietor: LA TRAVIATA LIMITED, Auckland (NZ)
(72) Inventor: SUCH, Duncan, Karl, Auckland (NZ)
(74) Representative: Algemeen Octrooi- en Merkenbureau B.V.
(86) International application number: PCT/NZ2004/000112
(87) International publication number: WO 2004/106063

(56) References cited:
- EP-A1- 0 728 561
- EP-A2- 0 276 358
- EP-A2- 0 945 235
- EP-B1- 0 510 231
- WO-A-02/14033
- WO-A-88/10182
- WO-A1-02/14033
- DE-A1- 2 321 292
- DE-A1- 3 517 194
- DE-A1- 10 124 695
- DE-C- 637 398
- US-A- 3 635 114
- US-A- 3 642 040
- US-A- 4 067 762

## Description

### FIELD OF INVENTION

The present invention relates to an edge banding apparatus as per the preamble of claim 1.

Such an apparatus is disclosed by DE 101 24 695.

### BACKGROUND

When edge tape is applied to panels, the edge tape is normally wider than the edge to which it is being applied so as to allow for variations in thickness of the panel and the variations in alignment when applying the tape. In prior art edge banding equipment the tape is first applied to the edge in a first pass of a first machine followed by the trimming of the tape top and bottom to make it flush with the panel surfaces which occurs in a separate process to the process of applying the tape to the edge of the panel. An example of an existing apparatus which can be used for the application of edge tape to an edge of a panel is, for example, shown in our PCT application WO 02/14033.

It would be desirable in order to reduce processing time for the same pass of tooling used to apply the tape to the edge of a panel, that a trimming process simultaneously occurs.

Previous edge banding equipment used in contoured panel applications have not provided for a one step application and trimming process. Current machines are mostly CNC controlled and edge banding is able to be applied by the positioning of a pressure roller in accordance to a pre programmed route or locus. The control of a trimming device from the same structure as the application roller can cause complications. The pressure roller and a trimming blade would need to be spaced apart sufficient to allow the tape adhesive to at least in part dry and to avoid fouling. CNC devices are position controlled by active servos. The additional incorporation and CNC control of a trimmer which is spatially separated from the pressure roller location would make for a very complex device where pre-programming of two positioning factors need to be taken into consideration, i.e. the roller and the trimmer. An example of current machines is as those exemplified in DE3517194, DE3702154, EP945235 and EP0728561. Other forms of modification of an edge of a panel may also be required. Accordingly whilst herein reference is made to the present invention in relation to the cutting or trimming of edge applied tape, it will be appreciated that the cutting device utilised may alternatively be substitutive by other units capable of for example performing a sanding operation, scraping operation or foil wrapping operation.

Accordingly it is an object of the present invention to provide a panel edge modification device or unit for a contour edge banding device which achieves the abovementioned desiderata or which will at least provide the public with a useful choice.

### BRIEF DESCRIPTION OF THE INVENTION

The present invention relates to a mechanism which allows suspending of a trimming unit off the same aggregate as that which applies the tape to the edge of a panel. The trimming operation follows immediately behind the tape applicator and trims the tape flush in one pass.

Accordingly the present invention consists in an edge banding apparatus according to claim 1.

A preferred form of the invention will now be described with reference to the accompanying drawings.

### BRIEF DESCRIPTION OF THE DRAWINGS

Figure 1 is a perspective view of an apparatus which may incorporate the present invention wherein the apparatus is either of the CNC kind or of an active bias kind as per our PCT application WO02/14033,
Figure 2 is a perspective view of a drawing uplifted from our PCT application WO02/14033 which illustrates the manner in which an active bias can be provided in order to ensure that the pressure roller remains in contact yet trackable along a profiled edge of a panel,

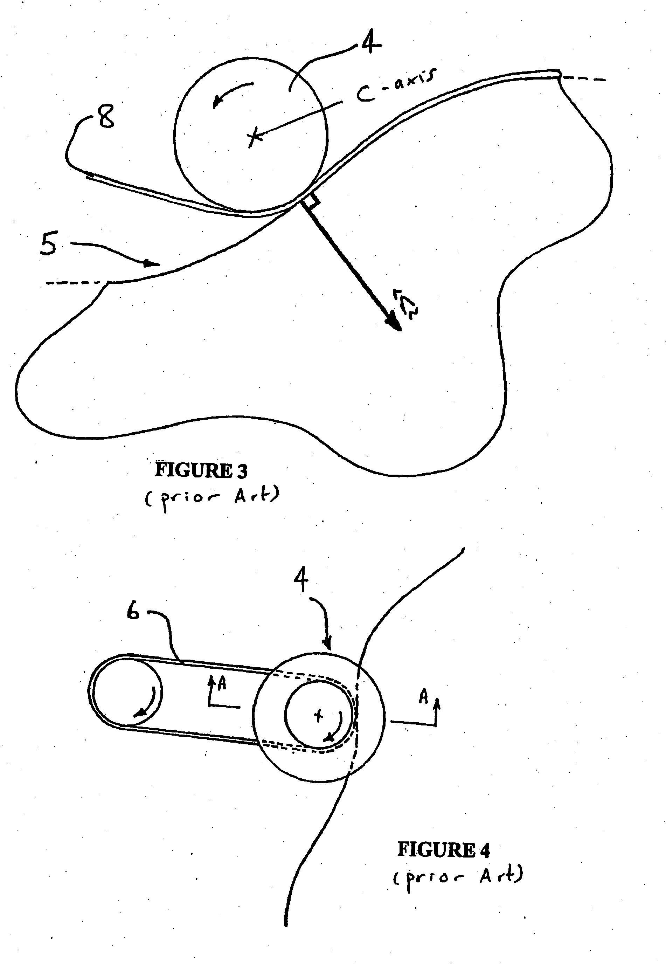

Figure 3 is a plan view of a prior art pressure roller and tape being applied to a profile and wherein the force applied to the pressure roller is generally in a direction normal to the tangent at where the pressure roller is being applied,
Figure 4 illustrates an example of how the prior art roller may be tracked along a profile edge of a panel by means of a drive mechanism,
Figure 5 is a perspective view of an edge taping or banding apparatus including a trimmer unit suspended trailing from the tape applicator portion of the unit wherein the perspective view is shown looking upwardly from below of a panel,
Figure 6 is a perspective view of an apparatus of the present invention wherein the trimming unit and the tape applicator are shown from a perspective from below of a panel and wherein the device is applied against a straight edge of such a panel,
Figure 7 is a perspective view looking upwardly from below a panel wherein the device is advancing around a convex corner of the panel,
Figure 8 is a perspective view looking upwardly from below a panel wherein the unit is advancing around a concave corner,
Figure 9 is a plan and simplified view of an arrangement of the present invention illustrating the positioning of the applicator unit and the cutting unit about a sharp corner,
Figure 10 is a plan and simplified view of an arrangement of the present invention wherein an intermediate pressure roller is provided between the applicator unit and the cutting unit,
Figure 11 and 12 illustrate alternatives with respect to the movement of the units about a sharp corner,
Figure 13 illustrates a plain and simplified view of an applicator unit and cutting unit wherein the cutting unit is able to move along an axis radially from the applicator unit, and

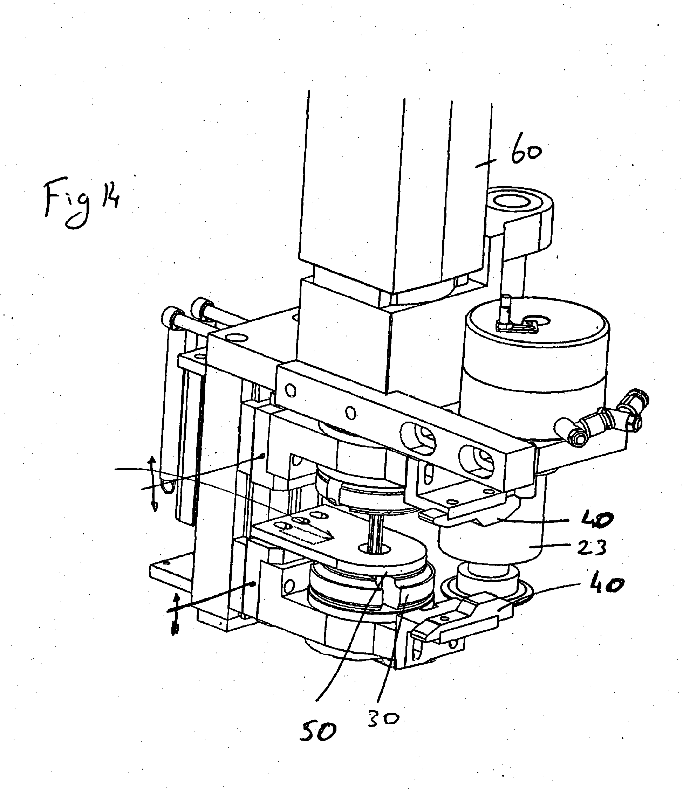

Figure 14 is a perspective view of the device in an alternative direction to that shown in Figure 6.

### DETAILED DESCRIPTION OF THE INVENTION

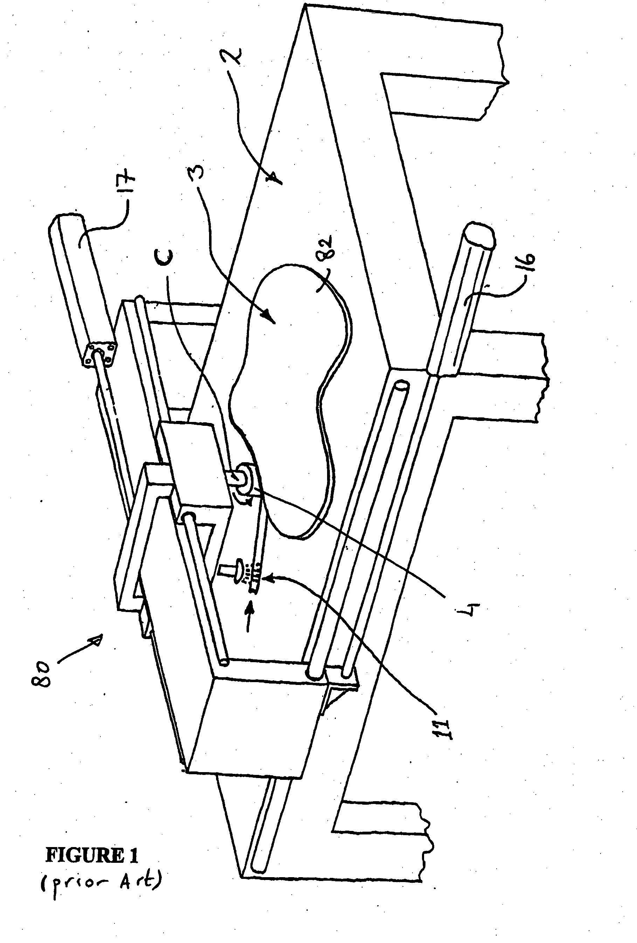

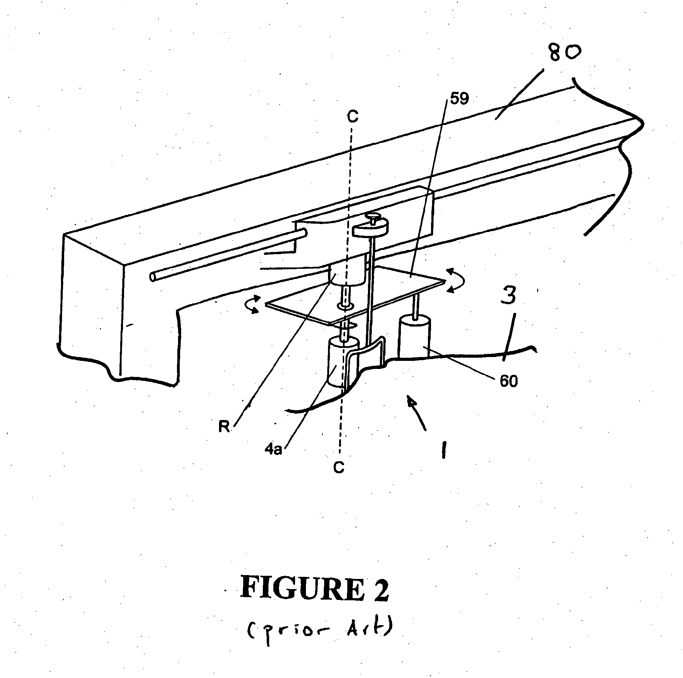

A trimming unit 12 of the present invention is movably dependent from a known form of tape unit 1. Whilst in one form the tape applicator unit may be of a kind which is exemplified by our PCT application WO02/14033 and which has in a simplified form been illustrated in Figures 1 and 2, it is envisaged that the trimming unit may be dependent from a tape applicator device which may for example be of a CNC kind, or a manual kind. Such a known device applies an edge banding tape 8 to an edge 5 of a panel 3 by utilising a pressure roller 4 which will apply a pressure against the tape held adjacent the edge of the panel and towards the panel particularly so for the purposes of placing and pressuring the tape 8 with its adhesive 11 against the edge to encourage adhesion between the panel and the tape. The present invention particularly lends itself to use with panels having in part, a contoured or curved or cornered perimeter profile. The tape applicator unit 1 will advance along an edge of a panel so as to apply tape 8 around at least part of the perimeter of the panel. However such tape 8 is normally of a width which is greater than the thickness of the panel. A tape of greater width is often used because of potential variations in thickness of the panel and/or alignment problems which may arise as the applicator unit 1 travels around the perimeter of the panel 3. Accordingly once the tape has been applied and adhered in place, excess material will extend beyond one or both of the major surfaces of the panel. Such excess tape extends beyond at least the bottom or top major surfaces of the panel 3 and is in need of trimming to ensure its edges are flush with the major surfaces of the panel 3. The trimming unit 12 of the present invention is disposed from the applicator unit 1 in a position to, during its movement along the perimeter of the panel 3, trail the applicator unit 1 such that it can perform a trimming operation on and subsequent to the tape 8 having been applied to the surface of the edge 5 of the panel.

As shown in Figure 1 in the arrangement as per our PCT application WO02/10433 the main pressure roller 4 is that roller to which the normalising force as a result of hydraulic or pneumatic rams 16 and 17 are provided to act. A leading roller 13 may be provided to sense the angle between the leading roller 13 and the pressure roller 4 relative to the support equipment from which the applicator unit is dependent. Knowing the angle, the pressure roller 4 is in direct support from the support structure such as for example the gantry arrangement 80 as per Figure 1 to act substantially normal to the edge of the panel 3 at where it is in contact with the panel 3 (or with a slight bias forward or backward). It is from the support 80 structure which controls the bias force, that the trimming unit 12 is dependent.

In the most preferred form the trimming unit 12 is movably dependent from the support structure 80 by means of two articulated arms 20, 21. A first arm 20 is pivotally engaged to the support structure preferably about the C axis. A second arm 21 is pivotally dependent about axis H provided between the first arm 20 and second arm 21 at a location on the first arm 20 away from its pivot C relative to the support structure. A trailing roller 23 is carried by the first arm 20 and is provided to act and follow against the edge of the panel 3. The pivoting of the first arm 20 is about an axis (e.g. axis C) which is substantially normal to the surfaces of the panel 3. The pivot axis H is preferably parallel to the pivot axis C.

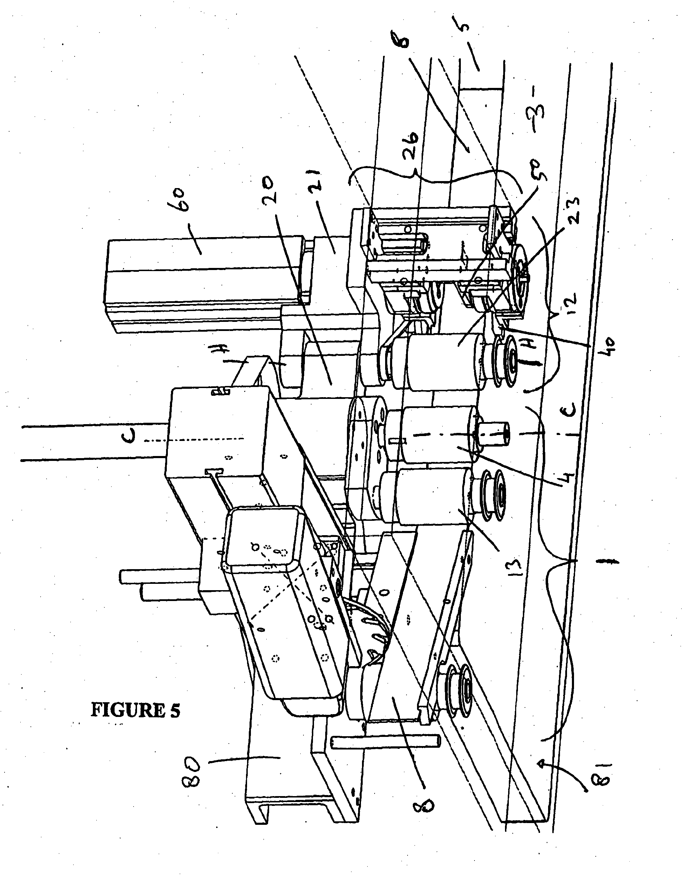

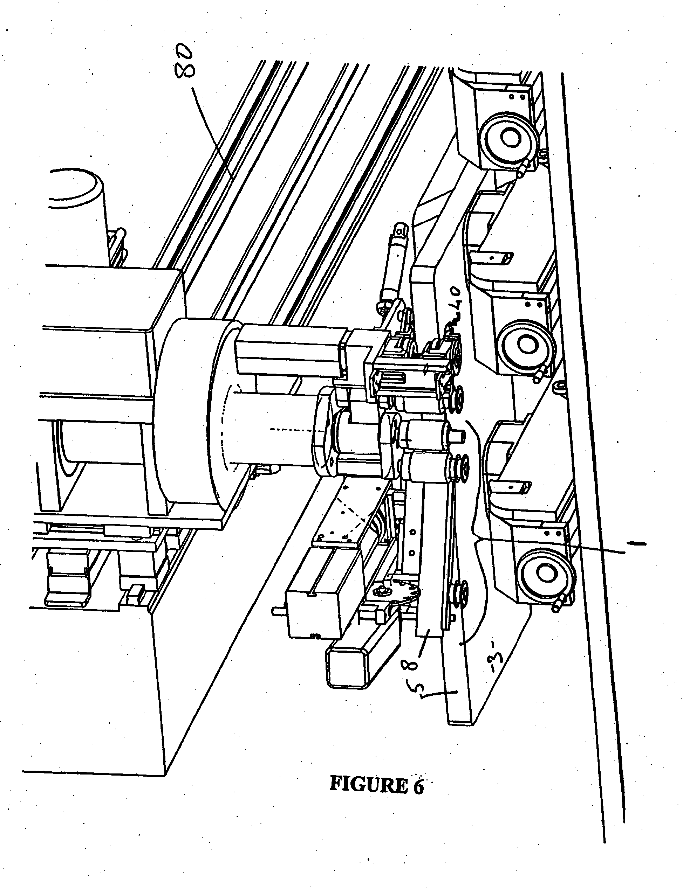

Dependent from the second arm 21 and away from its pivot axis H with the first arm 20 is a cutting means 26. The cutting means 26 preferably includes two cutters 30, 31 which include a plurality of cutting elements such as teeth which will be positioned relative to the panel so as to trim any excess top and bottom protruding tape extending beyond the first 81 and second 82 major surfaces of the panel 3. The cutters 30, 31 are dependent from the second arm 21 in a calliper like arrangement as for example shown in Figures 5, 6. The cutters 30, 31 can move up and down (i.e. along a direction parallel to axis C) independent from each other and relative to the second arm 21. In the most preferred form the cutters are rotational cutting elements which are provided about a spindle axis S which is preferably parallel to the C and H axes.

In order to ensure that only the excess of the tape is trimmed, tracer shoes 40 are provided fixed relative to each cutter 30, 31. Each shoe 40 (shown in Figure 5 only in respect of the lower cutter 30) is positioned so as to engage against the lower major surface of the panel 3. Its position against the panel 3 acts as a reference such that when the cutter 30 moves about the panel 3, the shoe 40 will ensure that its cutting elements are at a location to trim only the excess of the tape 8 extending beyond the major surface of the panel 3. A similar shoe (not shown) is provided for the upper cutting means 31.

The cutters 30, 31 are biased by a pneumatic cylinder (not shown) towards the panel 3 in order to ensure that each respective shoe 40 maintains contact with the major surface of the panel 3. Hence should the machine come to a variation in thickness of the panel the shoe will follow the increased thickness whether it is provided in the top or bottom side of the panel and move its respective cutter accordingly. In order to prevent the cutting means from engaging with the panel 3 a follower 50 is provided. The follower 50 will ensure that the cutters remain distally displaced at an appropriate distance from the edge of the panel (in a direction parallel to the major surfaces). The follower 50 is preferably fixed relative to the cutter axis S and is preferably dependent from the cutting means 26.

The arm 21 is pivotable and biased about the pivot axis H and in a direction to bias the follower 50 and hence the cutting elements towards the edge of the panel. Such bias is for example achieved by a servo motor. Drive means such as an electric motor 60 provides power to the cutters 30, 31. This preferably travels with the swing arm 21 and its rotation is preferably concentric with the rotation of the cutters 30, 31. Some form of coupling (such as a spline drive) may be provided between the lower cutter 30 and the motor 60 whereas the upper cutter 31 may be directly driven.

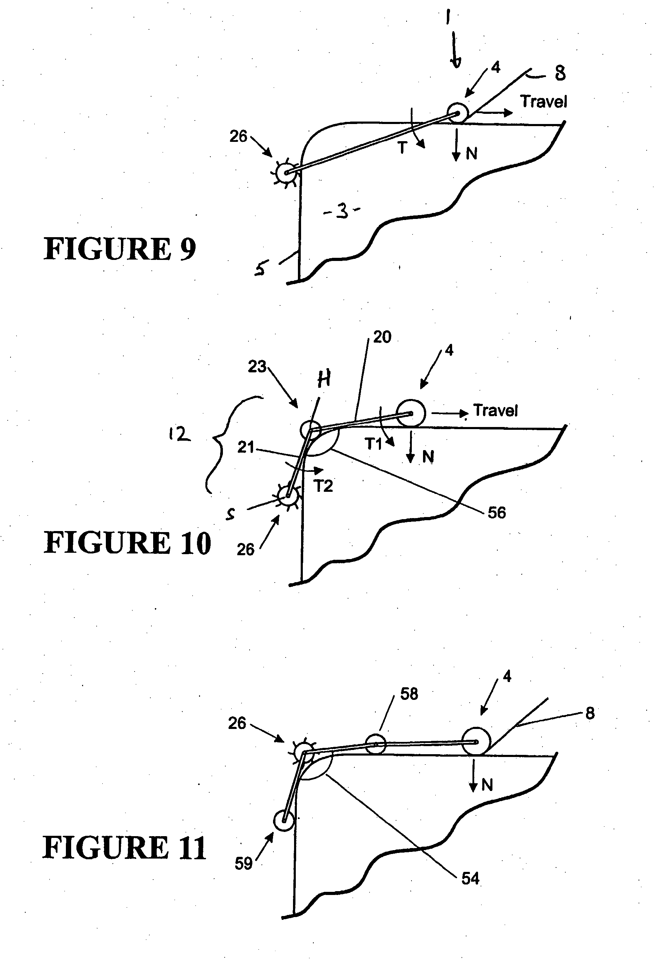

With reference to Figure 9, it can be seen that were the distance between the pressure roller 4 and the cutter 26 is too great, in instances where, for example, a sharp corner is provided to the panel, the force that needs to be applied to ensure travel of the application unit 1 in the appropriate direction to advance the application unit 1 may become very great as a result of the drag applied to the unit by the trimming unit, engaged against a surface of the panel which is normal or acute to the direction of travel of the pressure roller. Furthermore, the torque T which may need to be provided to encourage the cutter 26 to remain biased towards the edge of the panel 3 around the corner from the edge where the pressure roller is provided, may also need to be relatively high since the angle of the edge where the cutter is provided extends at a relatively shallow angle to the tangent of the arm rotatable about the pivot C of the pressure roller 4. Where both the pressure roller 4 and the cutter 26 are positioned against the same and a straight edge, the angle of the surface at where the cutter 26 is engaged is substantially normal to such a tangent, and such forces are not excessive.

Because of such inherent difficulties of maintaining adequate forces to advance the units around the panel the preferred form of the invention utilises shorter arm lengths so that sharp corners do not pose such angular problems. However, one important aspect that needs to be considered in the geometry of the present invention relates to the drying time required for the adhesive to take sufficient effect between the panel and the tape. Positioning of the cutter element too proximate to the pressure roller may not provide sufficient time for the adhesive to take effect to the extent required so that when the cutting of the excess tape occurs that the integrity of the bond between the panel and the tape is not adversely affected. An improvement to the single arm configuration shown in Figure 9, in which the angles of the surfaces relative to the locations where the biasing torque is applied, to ensure the biasing of the cutter 26 against the surface of a panel is achieved and still allows for convenient travel of the applicator unit and the cutting unit about sharp corners is shown in Figure 10.

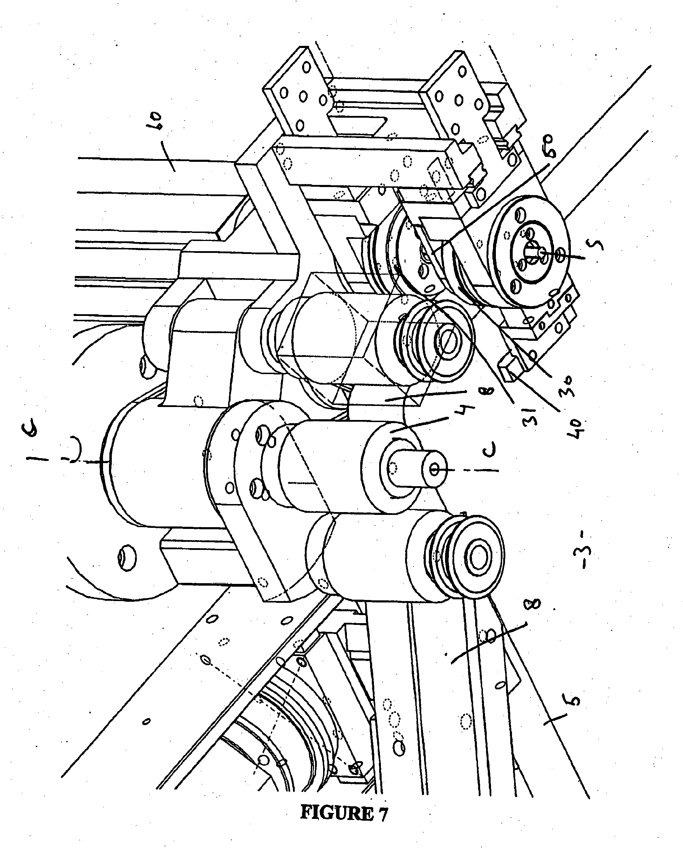

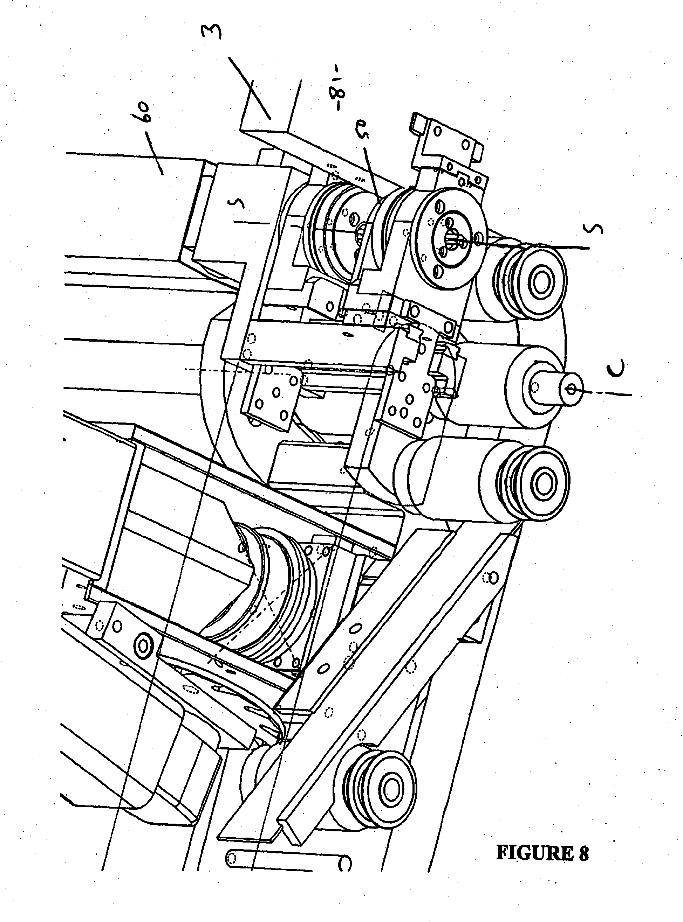

Figure 10 is a representative drawing of the arrangement of Figures 5-8. The provision of the intermediate contact roller 23 itself being biased about the first arm 20 from the pressure roller 4 is maintained in contact against the edge 5 of the panel by the torque T1 exerted about axis C. An additional torque providing means can induce the torque T2 which biases the arm 21 towards the panel to ensure that the cutter 26 is biased towards the panel for the purposes as hereinbefore described. The angle between arms 20 and 21 defined by angle 56 in Figure 10 may also be a measured angle which may be useful for determining the extent of the angle between the two edges which the entire devise is travelling about. Knowledge of such an angle may be utilised to influence the magnitude of the torque T1 and T2 that is applied in order to ensure that a smooth transition about the corner occurs.

Figure 11 shows an additional enhancement to the arrangement of Figure 10 wherein a further contact roller 59 is provided which can allow for the angle 54 between the contact roll of 59 and the roller 58 (or 23) to be measured. The roller 59 will help in applying a torque about the pivot at where the cutter 26 is provided such that when there is a significant drag applied on the lead pressure roller 4, as a result of the cutter being engaged against an edge around from a corner of the panel, such torque can help in reducing the normal force applied by the cutter 26 towards the panel and encourage a reduction in such normal force. For example when a contact roller 59 is biased towards the panel, there will be a tendency for the cutter to separate from the panel, but for the torque applied about the roller and its pivot 58.

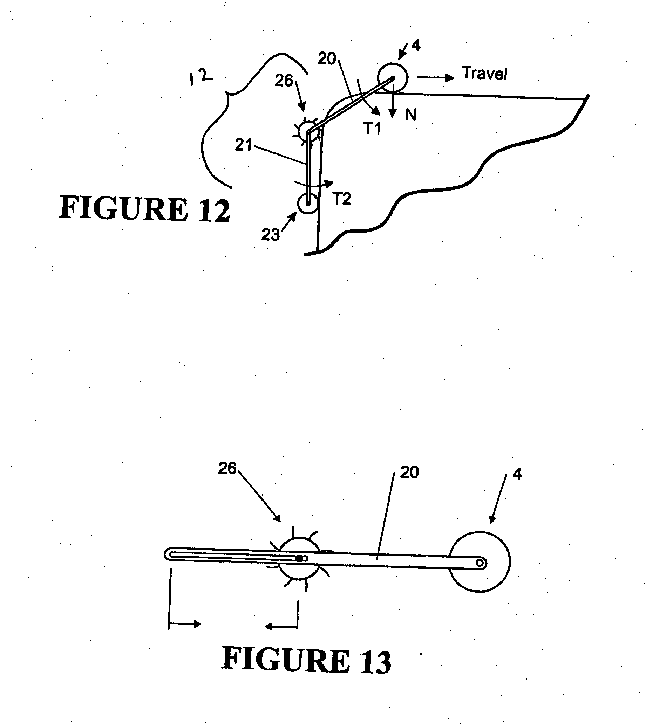

Figure 12 illustrates an alternative to Figure 10. In this instance the cutter 26 is provided as the first contact point trailing the pressure roller 4 of the application unit 1. The additional contact roller 23 is provided trailing the cutting element 26, however with the ability to measure the angle between the arms 20 and 21 the torque T2 and T1 can be varied to ensure that the drag resultant from the positioning of the cutter 26 on an edge around the corner from the pressure roller can be adjusted to allow for a suitable movement about that corner.

Figure 13 illustrates an additional variation wherein the cutter element 26 may move linearly along the arm 20 dependant from the pressure roller 4 the distance between the pressure roller 4 and the cutting means being variable and dependent on the nature of the corner about which the unit is travelling. For example where the corner is a sharp corner, the cutter may advance along the arm 20 towards the pressure roller 4. So that the angle between the arm 20 and the edge at where the cutter 26 is disposed, does not become close to being perpendicular. It will be appreciated that the longer the distance between the cutter and the pressure roller, the greater the likelihood of the angle between the line between the cutter 26 and the pressure roller 4 being perpendicular to the edge at where the cutter is provided when for example the device is travelling around a corner.

It will be appreciated from the above, that the cutting device of the present invention can be used with a tape applicator which has a central pivot axis C about which in a relative manner the workpiece rotates, whilst keeping the application roller 4 pressing normal to the edge.

The mechanism described relies on a pivot arm 20 which rotates about the C axis but cannot move vertically (axially) in relation to the C Axis. At the end of this pivot arm 20 is a pressure roller 23 which is pressed against the panel 5 (trailing the C axis) by a torque system which may be a simple rotary pneumatic actuator driving a torque chain.

Connected and dependent from the pivot arm 20 is a second pivot arm 21 which is likely although not necessarily pivoted about the axis H of the trailing roller 23. Depending on the characteristics desired, the pivot point H may be different to this roller axis.

This second pivot arm 21 holds the trimming unit 26 which consists of a drive motor 60 driving through a spline drive to cutters 30, 31 which are able to float vertically and are aligned to the edge to be trimmed via horizontal and vertical tracer shoes 40. This unit is (like the first pivot arm 20 and trailing roller 23) is held against the panel 3 by a torque system.

A horizontal tracer shoe 50 is in part, of the same diameter as the datum diameter of the cutter 30, 31 so the shape remains the same even when the cutter is not held exactly normal to the panel when viewed about a vertical axis. This applies in particular when applying a radius to the edge tape requiring an accurate alignment of the cutters to the panel edge 5 in both the vertical and horizontal directions.

The mechanism described above being a knuckle type joint ensures the cutter unit 26 is kept at a reasonably normal aspect to the panel while also creating enough room to swing freely in the course of tracing the panel 3.

A further benefit of the knuckle joint is that by being relatively compact, a simple torque system maintains pressure against the panel without the need for complex compensation mechanisms during tracing tight corners.

As mentioned, if the first pivot is too long, there is a tendency for it to catch and be difficult to pull around tight corners.

The obvious benefit is in the significantly reduced cycle time and reduced complexity of the application machine. Thus the output relative to the capital investment is significantly improved over machines which require two processes.

The mechanism described particularly relates to automatic machines but could equally be mounted on manual machines so as to reduce cycle times. In these instances, the operator moves the aggregate (or panel - depending on the configuration) and the same benefits of single versus double process apply.

Whilst reference herein is made predominantly to the use of a trimming unit for trimming edge tape to ensure it is flush with the top and bottom surfaces of a panel, the cutter 26 and described with reference to such, can in an alternative configuration be substituted by other units capable of modifying the edge of the panel. For example a sanding unit or scraping unit or foil wrapping unit may be attached for the purposes of sanding or scraping or foil wrapping the edge subsequent to the application of tape thereto.

## Claims

1. An edge banding apparatus for applying an edge tape (8) to the edge (5) of a contoured panel (3), said edge banding apparatus comprising
a) an edge tape (8) applicator (1) comprising
a pressure roller (4) pivoting about an axis C for applying an edge tape (8) to the edge (5) of said contoured panel (3) of a predetermined thickness by means of the pressure roller (4) when pressed against the edge (5) of said panel (3); and
means to move said pressure roller (4) for displacing the pressure roller (4) along the edge (5) of the panel (3) while advancing said tape to engage against the edge (5) of said panel (3) by being pressed there against by said pressure roller (4) as said edge applicator (1) advances about at least part of the perimeter of said panel (3), wherein
said edge banding apparatus further comprises
b) an edge tape modifying device comprising:
a swing arm (20) pivotally dependent about axis C of said pressure roller of said edge tape applicator (1) to be able to articulate relative thereto about axis C at said edge tape applicator (1) and at or towards an edge of said panel in operation, the axis C being parallel to the normal of the major surfaces (81, 82) of said panel (3), said swing arm (20) being biased about said pivotal attachment and a modifying unit supported
by said swing arm (20) at a distance from where the swing arm (20) is pivotably attached to said edge tape applicator (1), said modifying unit being biased towards yet guided for movement relative to the edge of said panel and comprising guiding means (50) for guiding movement of the modifying unit relative to the edge (5) of said panel (3) in order to perform a modifying operation on the edge (5) applied edge tape, **characterised by** said modifying unit being a trimming unit or a sanding unit or a scraping unit or a foil wrapping unit.

2. An edge banding apparatus as claimed in claim 1, wherein said trimming device (26) is guided by a panel surface follower engageable and biased towards a major surface of said panel (3) to ensure the trimming device (26) is maintained at a desirable distance to the panel (3) in a direction normal to the surface of said panel (3) so that the trimming operation is at the appropriate distance relative to said surface of said panel (3).

3. An edge banding apparatus as claimed in any one of claims 1 to 2, wherein said swing arm (20) by which said trimming device (26) is mounted is an articulatable arm (20) which includes a first arm portion (20) pivotable about an axis ("first arm pivot axis") at said tape applicator (1) and parallel to the normal of the major surfaces (81, 82) of said panel (3) and a second arm (21) pivotable relative to the first arm (20) about an axis ("second arm pivot axis") parallel to but displaced away from the first arm pivot axis, said trimming device (26) disposed from said second arm (21) away from said second arm pivot axis.

4. An edge banding apparatus as claimed in any one of claims 1 to 2, wherein said swing arm by which said trimming device (26) is mounted is an articulatable arm which includes a first arm portion (20) pivotable about an axis ("first arm pivot axis") at said tape applicator follower and parallel to the normal of the major surfaces (81, 82) of said panel (3) and a second arm (21) pivotable relative to the first arm (20) about an axis ("second arm pivot axis") parallel to but away displaced from the first arm pivot axis, said trimming device (26) disposed from said second arm (21) at said second arm pivot axis.

5. An edge banding apparatus as claimed in any one of claims 1 to 2, wherein said arm by which said trimming device (26) is mounted is an articulatable arm which includes a first arm portion (20) pivotable about an axis ("first arm pivot axis") at said tape applicator follower and parallel to the normal of the major surfaces (81, 82) of said panel (3) and a second arm (21) pivotable relative to the first arm (20) about an axis ("second arm pivot axis") parallel to but displaced away from the first arm pivot axis, said trimming device (26) disposed from said first arm (20) away from said first arm pivot axis.

6. An edge banding apparatus as claimed in any one of claims 3 to 5, wherein said second arm (21) is biased in use, from said first arm (20) in a direction to be towards said panel (3) by a torque force applied to said second arm (21) from said first arm (20) about said second arm pivot axis.

7. An edge banding apparatus as claimed in any one of claims 3 to 6, wherein said first arm (20) includes an edge follower (13, 4) at or proximate said second arm pivot axis to engage against said tape applied edge and biased there against.

8. An edge banding apparatus as claimed in claim 7, wherein said edge follower (13, 4) is a roller rotational about an axis coaxial with said second arm pivot axis.

9. An edge banding apparatus as claimed in claim 7, wherein said edge follower (13, 4) is a roller pivotable on a third pivot axis parallel to said second and first pivot axis and provided on said second arm (21) away from said second pivot axis.

10. An edge banding apparatus as claimed in any one of claims 1 to 9, wherein said trimming device (26) is a rotary device having an axis of rotation parallel to the normal of the major surfaces (81, 82) of said panel (3).

11. An edge banding apparatus as claimed in any one of claims 1 to 10, wherein said trimming device (26) is a rotary device having an axis of rotation acute or perpendicular to the normal of the major surfaces (81, 82) said panel (3).

12. An edge banding apparatus as claimed in any one of claims 1 to 11, wherein said trimming device (26) includes a follower element for said guided movement engageable against the tape applied edge of said panel (3) to ensure the trimming device (26) remains disposed at an appropriate distance in a plane parallel to the major surfaces, from said panel (3).

13. An edge banding apparatus as claimed in claim 12, wherein said follower element provides an arcuate following surface with its centroid at the rotational axis of said rotary device, to ensure the following means maintains consistent positioning of the rotary device relative to the panel (3), over a broad range of rotational positions of said trimming device (26) relative to said applicator.

14. An edge banding apparatus as claimed in any one of claims 1 to 13, wherein said modifying device includes a panel (3) major surface tracer shoe (40) engageable and biased towards a major surface of said panel (3) to ensure the trimming device (26) is maintained at a desirable distance to said panel (3) in a direction normal to the surface of said panel (3) so that any trimming of said tape by said trimming device (26) is to a level not cutting into said panel (3).

15. An edge banding apparatus as claimed in any one of claims 1 to 13, wherein said trimming device (26) is a trimming means comprising two rotary cutters (30, 31), each capable of being positioned to cut off excess tape protruding beyond the level of each major surface.

16. An edge banding apparatus as claimed in claim 15, wherein each cutter (30, 31) is independently movable relative to said panel (3) each with its own designated tracer shoe (40) to engage a respective major surface of said panel (3) to position a respective cutter (30, 31) at an appropriate distance relative to a respective major surface to trim any protruding tape, yet not cut the panel (3) itself.

17. An edge banding apparatus as claimed in any one of claims 15 or 16, wherein said cutters (30, 31) are mounted relative to each other in a calliper like arrangement and biased towards each other in a direction parallel to the normal of the major surfaces (81, 82) of said panel (3) yet held in a separated relationship by said tracer shoes (40).

18. An edge banding apparatus as claimed in any one of claim 15 or 16, wherein each cutter (30, 31) is independently movable relative to said panel (3) in a direction parallel to the normal of the major surfaces (81, 82) of said panel (3), each with its own designated panel follower to position a respective cutting means at an appropriate level relative to a respective major surface.

19. An edge banding apparatus as claimed in any one of claims 1 to 18 for the application of an edge tape (8) to at least part of an edge of a substantially planar panel (3) said edge (5) defining a perimeter of said panel (3) of an arbitrary profile, wherein said edge tape applicator (1) further comprises
a) means to mount said panel (3) on a fixed structure (80),
b) an edge follower including at least one edge contact roller to follow at least part of the perimeter of said panel (3),
c) an edge follower support structure (80) to allow displacement of said edge follower relative to said fixed structure and when in use, relative to a said panel (3),
d) an edge sensor capable of determining the slope of said profile of said panel (3) at where said edge follower is engaged to said panel (3) relative to a fixed frame of reference,
e) force application means (16, 17) to apply a vectored force to said edge follower to bias said at least one contact roller toward the edge (5) of said panel (3),
f) said force application means (16, 17) capable of vectoring the force applied to said edge follower relative to said fixed frame of reference and in response to the shape determined from said edge sensor in a manner to vector the resultant force to said edge follower in a direction
i. to bias said at least one contact roller (4) towards said edge and
ii. substantially not along said edge (save for optionally a very small component in or against the direction of travel of said edge follower (13) along said profile)
g) said edge follower includes a tape feeding means that allows for the feeding of tape onto the edge (5) of said panel (3) at where said contact roller is biased towards said panel (3) to, in use, press said tape onto the edge (5) of said panel (3).

20. An edge banding apparatus as claimed in claim 19, wherein said means to generate movement is provided by at least one driven roller (4) of said edge follower having an axis of rotation substantially parallel to the normal of the major surfaces (81, 82) of said panel (3), wherein said driven roller is in use pressed against the edge (5) of said panel (3), and upon its rotation generates relative movement between said edge follower (4) and said panel (3).

21. An edge banding apparatus as claimed in claim 20, wherein said driven roller is the, or at least one of, said at least one edge contact roller (4).

22. An edge banding apparatus as claimed in any one of claims 20 to 21, wherein one said at least one pressure roller (4) is a said driven roller.

23. An edge banding apparatus as claimed in any one of claims 20 to 21, wherein said at least one driven roller is provided in addition to said pressure roller (4).

24. An edge banding apparatus as claimed in any one of claims 19 to 23, wherein said edge sensor is able to sense the angle of the edge (5) at where said edge contact roller is pressed to said panel (3), relative to said frame of reference, by being responsive to the angle determined from the rotational position of said arm biased towards the edge (5) of said panel (3), about its axis of pivot at said edge follower (4).

25. An edge banding apparatus as claimed in any one of claims 19 to 24, wherein said means to mount said panel (3) to said fixed structure mounts said panel (3) in a non rotatable manner relative thereto.

26. An edge banding apparatus as claimed in any one of claims 19 to 25, wherein said edge follower support structure is a gantry arrangement (80) supported by and movable relative to said fixed structure, said gantry arrangement (80) comprising
a) a bridging portion located to said fixed structure and translationally movable relative there to along a first path of travel
b) a traveller located to said bridging structure and translationally movable relative there to along a second path of travel being transverse to said first path, wherein said edge follower (4) is mounted from said traveller to be displaced by said gantry arrangement (80) in a cartesian coordinate frame of reference, relative to said fixed structure.

27. An edge banding apparatus as claimed in any one of claims 19 to 25, wherein said edge follower (4) support structure is a swing arm (20) arrangement supported by and movable relative to said fixed structure, said swing arm (20) arrangement comprising
a) an arm pivotably located to said fixed structure about an axis of rotation
b) a traveler provided to said arm translationally movable along at least part of said arm wherein said edge follower (4) is mounted from said traveler to be displaced by said swing arm (20) arrangement in a polar coordinate frame of reference, relative to said fixed structure.

28. An edge banding apparatus as claimed in claim 0 for applying an edge tape (8) to a contoured edge of a panel (3), wherein said edge tape applicator (1) comprises:
a) a fixed structure (80) to which a said panel (3) can be mounted
b) a sensing means to determine the direction of travel, relative to a chosen frame of reference, of said edge follower (4) as it is moved along said edge profile
c) an active biasing means acting between said fixed structure and said edge follower (4) responsive to feedback from said sensing means to act on said edge follower (4) to control the direction of bias of said edge follower (4) towards said panel (3)
d) wherein said edge follower (4) carries a driven rotatable means (4) which engages with the edge (5) of said panel (3) to thereby generate the movement of said edge follower (4) along at least part of said profile,
e) a means to advance edging tape between a pressure roller (4) of said edge follower (4) and the edge (5) of said panel (3) to be affixed to said panel (3) at its edge.

29. An edge banding apparatus as claimed in claim 28, wherein said biasing means acts to bias said edge follower (4) with a directional component normal to the direction of movement and normal to the normal of the major surfaces (81, 82) of said panel (3).

30. An edge banding apparatus as claimed in any one of claims 28 to 29 wherein there is also a small component of direction of force of said biasing means on said edge follower (4) in the direction of movement or opposite to the direction of movement of said edge follower (4) along said edge profile.

31. An edge banding apparatus as claimed in any one of claims 28 to 30, wherein said sensing means senses the angle of said arm (59) relative to said reference frame to thereby provide feedback to said biasing means of the angular orientation at or approximate to the point where the driven rotatable means is in contact with said edge profile, to thereby appropriately allow for control the direction of bias of said biasing means to said edge follower (13, 4).

32. A method of edge banding an edge of a planar panel (3) using an edge banding apparatus according to anyone of the preceding claims, comprising
a) mounting a panel (3) on a support structure
b) placing a pressure roller (4) adjacent an edge of said panel (3) and
c) whilst providing a feed of edge banding material to engage with said panel (3) and which is fed onto said panel (3) between the pressure roller (4) and said panel (3), providing a rotation to an at least one rotating edge contact roller (4) which is in contact with the banded edge (5) of said panel (3) advancing said pressure roller (4) and said edge contact roller (4) with its edge along said edge and which simultaneously deposits the edge (5) tape to the edge (5) of said panel (3),
d) controlling a vectored force application means (16, 17) applying a vectored force to the edge (5) contact roller, which is controlled in response to the angle of the panel (3) at said edge contact roller (13, 4) to thereby press said edge contact roller (13, 4) against the edge (5) of said panel (3), and
e) said tape modifying device being a trimming device (26).

## Patentansprüche

1. Kantenanleimvorrichtung zum Anbringen eines Kantenbandes (8) an der Kante (5) einer konturierten Platte (3), wobei die Kantenanleimvorrichtung Folgendes umfasst:
a) einen Kantenband-(8)-Applikator (1), der Folgendes umfasst:
eine Druckrolle (4), die sich um eine Achse C dreht, um ein Kantenband (8) an der Kante (5) der konturierten Platte (3) einer vorbestimmten Dicke mittels der Druckrolle (4) anzubringen, wenn sie gegen die Kante (5) der Platte (3) gepresst wird; und
Mittel zum Bewegen der Druckrolle (4) zum Verschieben der Druckrolle (4) entlang der Kante (5) der Platte (3), während das Band vorwärtsbefördert wird, um an der Kante (5) der Platte (3) anzugreifen, indem es von der Druckrolle (4) dagegen gepresst wird, während sich der Kantenapplikator (1) um wenigstens einen Teil des Umfangs der Platte (3) vorwärtsbewegt, wobei
die Kantenanleimvorrichtung ferner Folgendes umfasst:
b) eine Kantenbandmodifiziervorrichtung, die Folgendes umfasst:
einen Schwingarm (20), der um eine Achse C der Druckrolle des Kantenbandapplikators (1) schwenkbar aufgehängt ist, so dass er relativ dazu um die Achse C an dem Kantenbandapplikator (1) und an oder zu einer Kante der Platte beim Betrieb ein Gelenk bilden kann, wobei die Achse C parallel zur Normalen der Hauptflächen (81, 82) der Platte (3) ist, wobei der Schwingarm (20) um die Schwenkbefestigung vorgespannt ist, und eine Modifiziereinheit, die von dem Schwingarm (20) in einem Abstand getragen wird, in dem der Schwingarm (20) schwenkbar an dem Kantenbandapplikator (1) angebracht ist, wobei die Modifiziereinheit in Richtung auf die Kante der Platte vorgespannt und dabei für eine Bewegung relativ zu dieser geführt ist und Führungsmittel (50) zum Führen der Bewegung der Modifiziereinheit relativ zur Kante (5) der Platte (3) umfasst, um einen Modifiziervorgang an dem an die Kante (5) angebrachten Kantenband auszuführen, **dadurch gekennzeichnet, dass** die Modifiziereinheit eine Fräseinheit oder eine Schleifeinheit oder eine Nachputzeinheit oder eine Folierungseinheit ist.

2. Kantenanleimvorrichtung nach Anspruch 1, wobei die Fräsvorrichtung (26) von einem Plattenoberflächennachläufer geführt wird, der mit einer Hauptfläche der Platte (3) in Eingriff gebracht werden kann und zu dieser hin vorgespannt ist, um zu gewährleisten, dass die Fräsvorrichtung (26) in einem gewünschten Abstand von der Platte (3) in einer Richtung normal zur Oberfläche der Platte (3) gehalten wird, so dass der Fräsvorgang im geeigneten Abstand von der Oberfläche der Platte (3) erfolgt.

3. Kantenanleimvorrichtung nach einem der Ansprüche 1 bis 2, wobei der Schwingarm (20), an dem die Fräsvorrichtung (26) montiert ist, ein abwinkelbarer Arm (20) ist, der einen ersten Armabschnitt (20) aufweist, der um eine Achse ("erste Armschwenkachse") an dem Bandapplikator (1) und parallel zur Normalen der Hauptflächen (81, 82) der Platte (3) schwenkbar ist, und einen zweiten Arm (21), der relativ zu dem ersten Arm (20) um eine Achse ("zweite Armschwenkachse") parallel zu, aber von der ersten Armschwenkachse weg verschoben schwenkbar ist, wobei die Fräsvorrichtung (26) von dem zweiten Arm (21) weg von der zweiten Armschwenkachse angeordnet ist.

4. Kantenanleimvorrichtung nach einem der Ansprüche 1 bis 2, wobei der Schwingarm, mit dem die Fräsvorrichtung (26) montiert ist, ein abwinkelbarer Arm ist, der einen ersten Armabschnitt (20), der um eine Achse ("erste Armschwenkachse") an dem Bandapplikatornachläufer und parallel zur Normalen der Hauptflächen (81, 82) der Platte (3) schwenkbar ist, und einen zweiten Arm (21) aufweist, der relativ zu dem ersten Arm (20) um eine Achse ("zweite Armschwenkachse") parallel zu der ersten Armschwenkachse, aber davon weg verschoben schwenkbar ist, wobei die Fräsvorrichtung (26) von dem zweiten Arm (21) an der zweiten Armschwenkachse angeordnet ist.

5. Kantenanleimvorrichtung nach einem der Ansprüche 1 bis 2, wobei der Arm, mit dem die Fräsvorrichtung (26) montiert ist, ein abwinkelbarer Arm ist, der einen ersten Armabschnitt (20), der um eine Achse ("erste Armschwenkachse") an dem Bandapplikatornachläufer und parallel zur Normalen der Hauptflächen (81, 82) der Platte (3) schwenkbar ist, und einen zweiten Arm (21) aufweist, der relativ zu dem ersten Arm (20) um eine Achse ("zweite Armschwenkachse") parallel zu der ersten Armschwenkachse, aber davon weg verschoben schwenkbar ist, wobei die Fräsvorrichtung (26) von dem ersten Arm (20) weg von der ersten Armschwenkachse angeordnet ist.

6. Kantenanleimvorrichtung nach einem der Ansprüche 3 bis 5, wobei der zweite Arm (21) beim Gebrauch von dem ersten Arm (20) in einer Richtung zu der Platte (3) hin durch ein Drehmoment vorgespannt wird, das von dem ersten Arm (20) um die zweite Armschwenkachse auf den zweiten Arm (21) aufgebracht wird.

7. Kantenanleimvorrichtung nach einem der Ansprüche 3 bis 6, wobei der erste Arm (20) einen Kantennachläufer (13, 4) an oder nahe der zweiten Armschwenkachse aufweist, der an der mit Band versehenen Kante und dagegen vorgespannt angreift.

8. Kantenanleimvorrichtung nach Anspruch 7, wobei der Kantennachläufer (13, 4) eine Rolle ist, die um eine Achse koaxial zu der zweiten Armschwenkachse rotiert.

9. Kantenanleimvorrichtung nach Anspruch 7, wobei der Kantennachläufer (13, 4) eine Rolle ist, die um eine dritte Schwenkachse parallel zu der zweiten und ersten Schwenkachse schwenkbar und auf dem zweiten Arm (21) weg von der zweiten Schwenkachse vorgesehen ist.

10. Kantenanleimvorrichtung nach einem der Ansprüche 1 bis 9, wobei die Fräsvorrichtung (26) eine Drehvorrichtung mit einer Drehachse parallel zur Normalen der Hauptflächen (81, 82) der Platte (3) ist.

11. Kantenanleimvorrichtung nach einem der Ansprüche 1 bis 10, wobei die Fräsvorrichtung (26) eine Drehvorrichtung mit einer Drehachse im spitzen Winkel oder lotrecht zur Normalen der Hauptflächen (81, 82) der Platte (3) ist.

12. Kantenanleimvorrichtung nach einem der Ansprüche 1 bis 11, wobei die Fräsvorrichtung (26) ein Nachlaufelement für die geführte Bewegung beinhaltet, das an der mit Band versehenen Kante der Platte (3) angreifen kann, um zu gewährleisten, dass die Fräsvorrichtung (26) in einem geeigneten Abstand von der Platte (3) in einer Ebene parallel zu den Hauptflächen angeordnet bleibt.

13. Kantenanleimvorrichtung nach Anspruch 12, wobei das Nachlaufelement eine bogenförmige Nachlauffläche mit Schwerpunkt an der Drehachse der Drehvorrichtung aufweist, um zu gewährleisten, dass das Nachlaufmittel eine einheitliche Positionierung der Drehvorrichtung relativ zur Platte (3) über einen breiten Bereich von Drehpositionen der Fräsvorrichtung (26) relativ zu dem Applikator hält.

14. Kantenanleimvorrichtung nach einem der Ansprüche 1 bis 13, wobei die Modifiziervorrichtung einen Abtastschuh (40) für die Hauptflächen der Platte (3) aufweist, der an einer Hauptfläche der Platte (3) angreifen und in Richtung auf diese vorgespannt werden kann, um zu gewährleisten, dass die Fräsvorrichtung (26) in einem gewünschten Abstand von der Platte (3) in einer Richtung normal zur Oberfläche der Platte (3) gehalten wird, so dass jedes Fräsen des Bandes durch die Fräsvorrichtung (26) nur so weit erfolgt, dass nicht in die Platte (3) geschnitten wird.

15. Kantenanleimvorrichtung nach einem der Ansprüche 1 bis 13, wobei die Fräsvorrichtung (26) ein Fräsmittel ist, das zwei rotierende Messer (30, 31) umfasst, die jeweils zum Abschneiden von über die Ebene jeder Hauptfläche hinaus vorstehendem überschüssigem Band positioniert werden können.

16. Kantenanleimvorrichtung nach Anspruch 15, wobei jedes Messer (30, 31) unabhängig relativ zur Platte (3) jeweils mit seinem eigenen designierten Abtastschuh (40) beweglich ist, der an einer jeweiligen Hauptfläche der Platte (3) angreift, um ein jeweiliges Messer (30, 31) in einem geeigneten Abstand relativ zu einer jeweiligen Hauptfläche zu positionieren, um eventuell vorstehendes Band abzuschneiden, aber nicht in die Platte (3) selbst zu schneiden.

17. Kantenanleimvorrichtung nach einem der Ansprüche 15 und 16, wobei die Messer (30, 31) relativ zueinander in einer bremssattelähnlichen Anordnung montiert sind und zueinander hin in einer Richtung parallel zur Normalen der Hauptflächen (81, 82) der Platte (3) vorgespannt und dabei durch die Abtastschuhe (40) in einer getrennten Beziehung gehalten werden.

18. Kantenanleimvorrichtung nach einem der Ansprüche 15 und 16, wobei jedes Messer (30, 31) unabhängig relativ zu der Platte (3) in einer Richtung parallel zur Normalen der Hauptflächen (81, 82) der Platte (3) beweglich ist, jeweils mit seinem eigenen designierten Plattennachläufer, um ein jeweiliges Schneidmittel auf einem geeigneten Niveau relativ zu einer jeweiligen Hauptfläche zu positionieren.

19. Kantenanleimvorrichtung nach einem der Ansprüche 1 bis 18 zum Anbringen eines Kantenbandes (8) an wenigstens einen Teil einer Kante einer im Wesentlichen planaren Platte (3), wobei die Kante (5) einen Umfang der Platte (3) mit einem willkürlichen Profil definiert, wobei der Kantenbandapplikator (1) ferner Folgendes umfasst:
a) Mittel zum Montieren der Platte (3) an einer festen Konstruktion (80),
b) einen Kantennachläufer mit wenigstens einer Kantenkontaktrolle, um wenigstens einem Teil des Umfangs der Platte (3) zu folgen,
c) eine Kantennachläufer-Tragkonstruktion (80), die eine Verschiebung des Kantennachläufers relativ zu der festen Konstruktion und beim Gebrauch relativ zu einer Platte (3) zulässt,
d) einen Kantensensor, der das Gefälle des Profils der Platte (3) ermitteln kann, wo der Kantennachläufer mit der Platte (3) relativ zu einem festen Referenzrahmen in Eingriff ist,
e) Kraftaufbringmittel (16, 17) zum Aufbringen einer Vektorkraft auf den Kantennachläufer, um die wenigstens eine Kontaktrolle in Richtung auf die Kante (5) der Platte (3) vorzuspannen,
f) wobei das Kraftaufbringmittel (16, 17) die auf den Kantennachläufer aufgebrachte Kraft relativ zu dem festen Referenzrahmen und als Reaktion auf die von dem Kantensensor ermittelte Form auf eine solche Weise vektorieren kann, dass die resultierende Kraft auf den Kantennachläufer in einer Richtung vektoriert wird:
i. um die wenigstens eine Kontaktrolle (4) in Richtung auf die Kante vorzuspannen, und
ii. im Wesentlichen nicht entlang der Kante (optional mit Ausnahme einer sehr kleinen Komponente in oder entgegen der Bewegungsrichtung des Kantennachläufers (13) entlang dem Profil),
g) wobei der Kantennachläufer ein Bandzuführungsmittel aufweist, so dass Band zu der Kante (5) der Platte (3) geführt werden kann, wo die Kontaktrolle in Richtung auf die Platte (3) vorgespannt ist, um das Band beim Gebrauch an die Kante (5) der Platte (3) zu pressen.

20. Kantenanleimvorrichtung nach Anspruch 19, wobei das Mittel zum Erzeugen von Bewegung mit wenigstens einer angetriebenen Rolle (4) des Kantennachläufers mit einer Drehachse im Wesentlichen parallel zur Normalen der Hauptflächen (81, 82) der Platte (3) versehen ist, wobei die angetriebene Rolle beim Gebrauch gegen die Kante (5) der Platte (3) gepresst wird und bei ihrer Rotation eine relative Bewegung zwischen dem Kantennachläufer (4) und der Platte (3) erzeugt.

21. Kantenanleimvorrichtung nach Anspruch 20, wobei die angetriebene Rolle die, oder wenigstens eine der, wenigstens eine(n) Kantenkontaktrolle(n) (4) ist.

22. Kantenanleimvorrichtung nach einem der Ansprüche 20 bis 21, wobei die wenigstens eine Druckrolle (4) eine angetriebene Rolle ist.

23. Kantenanleimvorrichtung nach einem der Ansprüche 20 bis 21, wobei die wenigstens eine angetriebene Rolle zusätzlich zu der Druckrolle (4) vorgesehen ist.

24. Kantenanleimvorrichtung nach einem der Ansprüche 19 bis 23, wobei der Kantensensor den Winkel der Kante (5), wo die Kantenkontaktrolle auf die Platte (3) gepresst wird, relativ zu dem Referenzrahmen erfassen kann, indem er auf den Winkel anspricht, der von der Drehposition des zur Kante (5) der Platte (3) hin vorgespannten Arms um seine Schwenkachse an dem Kantennachläufer (4) ermittelt wurde.

25. Kantenanleimvorrichtung nach einem der Ansprüche 19 bis 24, wobei das Mittel zum Montieren der Platte (3) an der festen Konstruktion die Platte (3) in einer relativ dazu nicht drehbaren Weise montiert.

26. Kantenanleimvorrichtung nach einem der Ansprüche 19 bis 25, wobei die Kantennachläufer-Tragkonstruktion eine Portalanordnung (80) ist, die von der festen Konstruktion getragen wird und relativ zu dieser beweglich ist, wobei die Portalanordnung (80) Folgendes umfasst:
a) einen Überbrückungsteil, der sich an der festen Konstruktion befindet und translational relativ zu dieser über einen ersten Verfahrweg beweglich ist,
b) eine Laufkatze, die an der Überbrückungskonstruktion positioniert und translational relativ zu dieser über einen zweiten Verfahrweg transversal zu dem ersten Weg beweglich ist, wobei der Kantennachläufer (4) so an der Laufkatze montiert ist, dass er von der Portalanordnung (80) in einem kartesischen Koordinaten-Referenzrahmen relativ zu der festen Konstruktion verschoben werden kann.

27. Kantenanleimvorrichtung nach einem der Ansprüche 19 bis 25, wobei die Tragkonstruktion des Kantennachläufers (4) eine Schwingarmanordnung (20) ist, die von der festen Konstruktion getragen wird und relativ zu dieser beweglich ist, wobei die Schwingarmanordnung (20) Folgendes umfasst:
a) einen Arm, der um eine Drehachse schwenkbar an der festen Konstruktion positioniert ist,
b) eine Laufkatze, die an dem Arm entlang wenigstens einem Teil des Arms translational beweglich vorgesehen ist, wobei der Kantennachläufer (4) so an der Laufkatze montiert ist, dass er von der Schwingarmanordnung (20) in einem polaren Koordinaten-Referenzrahmen relativ zu der festen Konstruktion verschoben wird.

28. Kantenanleimvorrichtung nach Anspruch 1 zum Anbringen eines Kantenbandes (8) an einer konturierten Kante einer Platte (3), wobei der Kantenbandapplikator (1) Folgendes umfasst:
a) eine feste Konstruktion (80), an der eine Platte (3) montiert werden kann,
b) ein Erfassungsmittel zum Ermitteln der Verfahrrichtung relativ zu einem gewählten Referenzrahmen des Kantennachläufers (4), während er entlang dem Kantenprofil bewegt wird,
c) ein aktives Vorspannmittel, das zwischen der festen Konstruktion und dem Kantennachläufer (4) als Reaktion auf Feedback von dem Erfassungsmittel wirkt, um auf den Kantennachläufer (4) zu wirken, um die Vorspannrichtung des Kantennachläufers (4) zu der Platte (3) hin zu regeln,
d) wobei der Kantennachläufer (4) ein angetriebenes drehbares Mittel (4) trägt, das an der Kante (5) der Platte (3) angreift, um dadurch die Bewegung des Kantennachläufers (4) entlang wenigstens einem Teil des Profils zu erzeugen,
e) ein Mittel zum Vorwärtsbewegen von Kantenband zwischen einer Druckrolle (4) des Kantennachläufers (4) und der Kante (5) der Platte (3), um an der Platte (3) an deren Kante befestigt zu werden.

29. Kantenanleimvorrichtung nach Anspruch 28, wobei das Vorspannmittel die Wirkung hat, den Kantennachläufer (4) mit einer Richtungskomponente normal zur Bewegungsrichtung und normal zur Normalen der Hauptflächen (81, 82) der Platte (3) vorzuspannen.

30. Kantenanleimvorrichtung nach einem der Ansprüche 28 bis 29, wobei auch eine kleine Kraftrichtungskomponente des Vorspannmittels auf dem Kantennachläufer (4) in der Bewegungsrichtung oder entgegen der Bewegungsrichtung des Kantennachläufers (4) entlang dem Kantenprofil vorliegt.

31. Kantenanleimvorrichtung nach einem der Ansprüche 28 bis 30, wobei das Erfassungsmittel den Winkel des Arms (59) relativ zu dem Referenzrahmen erfasst, um dem Vorspannmittel so Feedback über die Winkelorientierung an oder nahe dem Punkt zu geben, an dem das angetriebene drehbare Mittel mit dem Kantenprofil in Kontakt ist, damit die Vorspannrichtung des Vorspannmittels zu dem Kantennachläufer (13, 4) auf geeignete Weise geregelt werden kann.

32. Verfahren zum Kantenanleimen einer Kante einer planaren Platte (3) mittels einer Kantenanleimvorrichtung nach einem der vorherigen Ansprüche, das Folgendes beinhaltet:
a) Montieren einer Platte (3) an einer Tragkonstruktion,
b) Platzieren einer Druckrolle (4) neben einer Kante der Platte (3), und
c) während des Zuführens von Kantenanleimmaterial für den Eingriff mit der Platte (3), das der Platte (3) zwischen der Druckrolle (4) und der Platte (3) zugeführt wird, Versetzen wenigstens einer rotierenden Kantenkontaktrolle (4), die mit der mit Band versehenen Kante (5) der Platte (3) in Kontakt ist, in Drehung, so dass die Druckrolle (4) und die Kantenkontaktrolle (4) mit ihrer Kante entlang der Kante vorwärts bewegt werden und gleichzeitig das Kantenband an der Kante (5) der Platte (3) aufgebracht wird,
d) Steuern eines Vektorkraftaufbringmittels (16, 17), das eine Vektorkraft auf die Kanten-(5)-Kontaktrolle aufbringt, die als Reaktion auf den Winkel der Platte (3) an der Kantenkontaktrolle (13, 4) gesteuert wird, um dadurch die Kantenkontaktrolle (13, 4) gegen die Kante (5) der Platte (3) zu pressen, und
e) wobei die Bandmodifiziervorrichtung eine Fräsvorrichtung (26) ist.

## Revendications

1. Appareil de placage de chant pour appliquer une bande de chant (8) sur le chant (5) d'un panneau profilé (3), ledit appareil de placage de chant comprenant :
a) un applicateur (1) de bande de chant (8) comprenant :
un rouleau de pression (4) pivotant autour d'un axe C pour appliquer une bande de chant (8) sur le chant (5) dudit panneau profilé (3) d'une épaisseur prédéterminée au moyen du rouleau de pression (4) lorsqu'il pressé contre le chant (5) dudit panneau (3) ; et
des moyens pour déplacer ledit rouleau de pression (4) afin de déplacer le rouleau de pression (4) le long du chant (5) du panneau (3) tout en faisant avancer ladite bande afin de se mettre en prise contre le chant (5) dudit panneau (3) en étant pressé contre ce dernier par ledit rouleau de pression (4) lorsque ledit applicateur de chant (1) avance autour d'au moins une partie du périmètre dudit panneau (3), dans lequel :
ledit appareil de placage de chant comprend en outre :
b) un dispositif de modification de bande de chant comprenant :
un bras oscillant (20) suspendu de manière pivotante autour de l'axe C dudit rouleau de pression dudit applicateur (1) de bande de chant afin de pouvoir s'articuler par rapport à ce dernier autour de l'axe C au niveau dudit applicateur (1) de bande de chant et au niveau de ou vers un chant dudit panneau en fonctionnement, l'axe C étant parallèle à la normale des surfaces principales (81, 82) dudit panneau (3), ledit bras oscillant (20) étant sollicité autour d'une fixation pivotante et d'une unité de modification supportée par ledit bras oscillant (20) à une distance de l'endroit où le bras oscillant (20) est fixé de manière pivotante audit applicateur (1) de bande de chant, ladite unité de modification étant sollicitée vers, tout en étant guidée pour le déplacement par rapport au chant dudit panneau et comprenant des moyens de guidage (50) pour guider le mouvement de l'unité de modification par rapport au chant (5) dudit panneau (3) afin de réaliser une opération de modification sur la bande de chant appliquée sur le chant (5), **caractérisé par** ladite unité de modification qui est une unité d'ébavurage ou une unité de ponçage ou une unité de raclage ou une unité d'enroulement de feuille.

2. Appareil de placage de chant selon la revendication 1, dans lequel ledit dispositif d'ébavurage (26) est guidé par un rouleau suiveur de surface de panneau pouvant être mis en prise et sollicité vers une surface principale dudit panneau (3) pour garantir que le dispositif d'ébavurage (26) est maintenu à une distance souhaitable du panneau (3) dans une direction perpendiculaire à la surface dudit panneau (3) de sorte que l'opération d'ébavurage est réalisée à la distance appropriée par rapport à ladite surface dudit panneau (3).

3. Appareil de placage de chant selon l'une quelconque des revendications 1 à 2, dans lequel ledit bras oscillant (20) sur lequel ledit dispositif d'ébavurage (26) est monté, est un bras pouvant s'articuler (20) qui comprend une première partie de bras (20) pouvant pivoter autour d'un axe (« premier axe de pivot de bras ») au niveau dudit applicateur de bande (1) et parallèle à la normale des surfaces principales (81, 82) dudit panneau (3) et un second bras (21) pouvant pivoter par rapport au premier bras (20) autour d'un axe (« deuxième axe de pivot de bras ») parallèle à mais éloigné du premier axe de pivot de bras, ledit dispositif d'ébavurage (26) étant disposé par rapport audit second bras (21) à distance dudit deuxième axe de pivot de bras.

4. Appareil de placage de chant selon l'une quelconque des revendications 1 à 2, dans lequel ledit bras oscillant sur lequel ledit dispositif d'ébavurage (26) est monté, est un bras pouvant s'articuler qui comprend une première partie de bras (20) pouvant pivoter autour d'un axe (« premier axe de pivot de bras ») au niveau dudit rouleau suiveur d'applicateur de bande et parallèle à la normale desdites surfaces principales (81, 82) dudit panneau (3) et un second bras (21) pouvant pivoter par rapport au premier bras (20) autour d'un axe(« deuxième axe de pivot de bras ») parallèle à mais déplacé à distance du premier axe de pivot de bras, ledit dispositif d'ébavurage (26) étant disposé à distance dudit second bras (21) au niveau dudit second axe du pivot de bras.

5. Appareil de placage de chant selon l'une quelconque des revendications 1 à 2, dans lequel ledit bras sur lequel le dispositif d'ébavurage (26) est monté, est un bras pouvant s'articuler qui comprend une première partie de bras (20) pouvant pivoter autour d'un axe (« premier axe de pivot de bras ») au niveau du rouleau suiveur d'applicateur de bande et parallèle à la normale des surfaces principales (81, 82) dudit panneau (3) et un second bras (21) pouvant pivoter par rapport au premier bras (20) autour d'un axe (« deuxième axe de pivot de bras ») parallèle à mais déplacé à distance du premier axe de pivot de bras, ledit dispositif d'ébavurage (26) étant disposé par rapport audit premier bras (20) à distance dudit premier axe de pivot de bras.

6. Appareil de placage de chant selon l'une quelconque des revendications 3 à 5, dans lequel ledit second bras (21) est sollicité, à l'usage, à partir dudit premier bras (20) dans une direction pour être vers ledit panneau (3) par une force de couple appliquée sur ledit second bras (21) à partir dudit premier bras (20) autour dudit deuxième axe de pivot de bras.

7. Appareil de placage de chant selon l'une quelconque des revendications 3 à 6, dans lequel ledit premier bras (20) comprend un rouleau suiveur de chant (13, 4) au niveau de ou à proximité dudit deuxième axe de pivot de bras pour se mettre en prise contre ledit chat appliqué de la bande et sollicité contre ce dernier.

8. Appareil de placage de chant selon la revendication 7, dans lequel ledit rouleau suiveur de chant (13, 4) est un rouleau pouvant tourner autour d'un axe coaxial avec ledit deuxième axe de pivot de bras.

9. Appareil de placage de chant selon la revendication 7, dans lequel ledit rouleau suiveur de chant (13, 4) est un rouleau pouvant pivoter autour d'un troisième axe de pivot parallèle auxdits deuxième et premier axes de pivot et prévu sur ledit second bras (21) à distance dudit deuxième axe de pivot.

10. Appareil de placage de chant selon l'une quelconque des revendications 1 à 9, dans lequel ledit appareil d'ébavurage (26) est un dispositif rotatif ayant un axe de rotation parallèle à la normale des surfaces principales (81, 82) dudit panneau (3).

11. Appareil de placage de chant selon l'une quelconque des revendications 1 à 10, dans lequel ledit dispositif d'ébavurage (26) est un dispositif rotatif ayant un axe de rotation aigu ou perpendiculaire par rapport à la normale des surfaces principales (81, 82) dudit panneau (3).

12. Appareil de placage de chant selon l'une quelconque des revendications 1 à 11, dans lequel ledit dispositif d'ébavurage (26) comprend un élément de rouleau suiveur pour ledit mouvement guidé pouvant se mettre en prise contre le chant appliqué de la bande sur le chant dudit panneau (3) afin de garantir que le dispositif d'ébavurage (26) reste disposé à une distance appropriée dans un plan parallèle aux surfaces principales, à partir dudit panneau (3).

13. Appareil de placage de chant selon la revendication 12, dans lequel ledit élément de rouleau suiveur fournit une surface de suivi arquée avec son centroïde au niveau de l'axe de rotation dudit dispositif rotatif, afin de garantir que les moyens de rouleau suiveur conservent un positionnement cohérent du dispositif rotatif par rapport au panneau (3), sur une large plage de positions de rotation dudit dispositif d'ébavurage (26) par rapport audit applicateur.

14. Appareil de placage de chant selon l'une quelconque des revendications 1 à 13, dans lequel ledit dispositif de modification comprend un patin palpeur (40) de surface principale de panneau (3) pouvant se mettre en prise et étant sollicité vers une surface principale dudit panneau (3) pour garantir que le dispositif d'ébavurage (26) est maintenu à une distance souhaitable dudit panneau (3) dans une direction perpendiculaire à la surface dudit panneau (3) de sorte que tout ébavurage de ladite bande par ledit dispositif d'ébavurage (26) est à un niveau ne coupant pas ledit panneau (3).

15. Appareil de placage de chant selon l'une quelconque des revendications 1 à 13, dans lequel ledit dispositif d'ébavurage (26) est un moyen d'ébavurage comprenant deux dispositifs de coupe rotatifs (30, 31), chacun pouvant être positionné pour couper la bande excessive faisant saillie au-delà du niveau de chaque surface principale.

16. Appareil de placage de chant selon la revendication 15, dans lequel chaque dispositif de coupe (30, 31) est indépendamment mobile par rapport audit panneau (3), chacun avec son propre patin palpeur (40) désigné pour mettre en prise une surface principale respective dudit panneau (3) afin de positionner un dispositif de coupe (30, 31) respectif à une distance appropriée par rapport à une surface principale respective pour ébavurer toute bande en saillie, sans pour autant couper le panneau (3) lui-même.

17. Appareil de placage de chant selon l'une quelconque des revendications 15 ou 16, dans lequel lesdits dispositifs de coupe (30, 31) sont montés l'un par rapport à l'autre dans un agencement en forme d'étrier et sollicités l'un vers l'autre dans une direction parallèle à la normale des surfaces principales (81, 82) dudit panneau (3) tout en étant maintenus en relation séparée par lesdits patins palpeurs (40).

18. Appareil de placage de chant selon l'une quelconque des revendications 15 ou 16, dans lequel chaque dispositif de coupe (30, 31) est indépendamment mobile par rapport audit panneau (3) dans une direction parallèle à la normale des surfaces principales (81, 82) dudit panneau (3), chacun avec son propre rouleau suiveur de panneau désigné afin de positionner un moyen de coupe respectif à un niveau approprié par rapport à une surface principale respective.

19. Appareil de placage de chant selon l'une quelconque des revendications 1 à 18 pour l'application d'une bande de chant (8) sur au moins une partie d'un chant d'un panneau (3) sensiblement plan, ledit chant (5) définissant un périmètre dudit panneau (3) d'un profil arbitraire, dans lequel ledit applicateur (1) de bande de chant comprend en outre :
a) un moyen pour monter ledit panneau (3) sur une structure fixe (80),
b) un rouleau suiveur de chant comprenant au moins un rouleau de contact de chant pour suivre au moins une partie du périmètre dudit panneau (3),
c) une structure de support (80) de rouleau suiveur de chant pour permettre le déplacement dudit rouleau suiveur de chant par rapport à ladite structure fixe et lorsqu'elle est utilisée, par rapport audit panneau (3),
d) un capteur de chant pouvant déterminer l'inclinaison dudit profil dudit panneau (3) à l'endroit où ledit rouleau suiveur de chant est mis en prise avec ledit panneau (3) par rapport à un cadre fixe de référence,
e) un moyen d'application de force (16, 17) pour appliquer une force dirigée sur ledit rouleau suiveur de chant afin de solliciter ledit au moins un rouleau de contact vers le chant (5) dudit panneau (3),
f) ledit moyen d'application de force (16, 17) pouvant guider la force appliquée sur ledit rouleau suiveur de chant par rapport audit cadre fixe de référence et en réponse à la forme déterminée à partir dudit capteur de chant afin de guider la force résultante vers ledit rouleau suiveur de chant dans une direction,
i. pour solliciter ledit au moins un rouleau de contact (4) vers ledit chant, et
ii. sensiblement pas le long dudit chant (excepté, facultativement pour une très petite composante dans ou contre la direction de déplacement dudit rouleau suiveur de chant (13) le long dudit profil),
g) ledit rouleau suiveur de chant comprend un moyen d'alimentation en bande qui permet l'alimentation de la bande sur le chant (5) dudit panneau (3) à l'endroit où ledit rouleau de contact est sollicité vers ledit panneau (3) pour, à l'usage, comprimer ladite bande sur le chant (5) dudit panneau (3).

20. Appareil de placage de chant selon la revendication 19, dans lequel ledit moyen pour générer un mouvement est fourni par au moins un rouleau entraîné (4) dudit rouleau suiveur de chant ayant un axe de rotation sensiblement parallèle à la normale desdites surfaces principales (81, 82) dudit panneau (3), dans lequel ledit rouleau entraîné est, à l'usage, pressé contre le bord (5) dudit panneau (3), et suite à sa rotation, génère le mouvement relatif entre ledit rouleau suiveur de chant (4) et ledit panneau (3).

21. Appareil de placage de chant selon la revendication 20, dans lequel ledit rouleau entraîné est le ou au moins l'une dudit au moins un rouleau de contact de chant (4).

22. Appareil de placage de chant selon l'une quelconque des revendications 20 à 21, dans lequel ledit au moins un rouleau de pression (4) est ledit rouleau entraîné.

23. Appareil de placage de chant selon l'une quelconque des revendications 20 à 21, dans lequel ledit au moins un rouleau entraîné est prévu en plus dudit rouleau de pression (4).

24. Appareil de placage de chant selon l'une quelconque des revendications 19 à 23, dans lequel le capteur de chant peut détecter l'angle du chant (5) à l'endroit où ledit rouleau de contact de chant est pressé sur ledit panneau (3), par rapport audit cadre de référence, en étant sensible à l'angle déterminé à partir de la position de rotation dudit bras sollicité vers le chant (5) dudit panneau (3), autour de son axe de pivot au niveau dudit rouleau suiveur de chant (4).

25. Appareil de placage de chant selon l'une quelconque des revendications 19 à 24, dans lequel ledit moyen pour monter ledit panneau (3) sur ladite structure fixe, monte ledit panneau (3) d'une manière non rotative par rapport à cette dernière.

26. Appareil de placage de chant selon l'une quelconque des revendications 19 à 25, dans lequel ladite structure de support de rouleau suiveur de chant est un agencement de passerelle (80) supporté par et mobile par rapport à ladite structure fixe, ledit agencement de passerelle (80) comprenant :
a) une partie de pont positionnée sur ladite structure fixe et mobile en translation par rapport à cette dernière le long d'une première trajectoire de déplacement,
b) un coulisseau positionné sur ladite structure de pont et mobile en translation par rapport à cette dernière par rapport à une seconde trajectoire de déplacement qui est transversale par rapport à ladite première trajectoire, dans lequel ledit rouleau suiveur de chant (4) est monté sur ledit coulisseau pour être déplacé par ledit agencement de passerelle (80) dans un cadre de référence à coordonnées cartésiennes, par rapport à ladite structure fixe.

27. Appareil de placage de chant selon l'une quelconque des revendications 19 à 25, dans lequel ladite structure de support de rouleau suiveur de chant (4) est un agencement de bras oscillant (20) supporté par et mobile par rapport à ladite structure fixe, ledit agencement de bras oscillant (20) comprenant :
a) un bras positionné de manière pivotante sur ladite structure fixe autour d'un axe de rotation,
b) un coulisseau prévu sur ledit bras mobile en translation le long d'au moins une partie dudit bras, dans lequel ledit rouleau suiveur de chant (4) est monté sur ledit coulisseau pour être déplacé par ledit agencement de bras oscillant (20) dans un cadre de référence à coordonnées polaires, par rapport à ladite structure fixe.

28. Appareil de placage de chant selon la revendication 1 pour appliquer une bande chant (8) sur un chant profilé d'un panneau (3), dans lequel ledit applicateur (1) de bande de chant comprend :
a) une structure fixe (80) sur laquelle ledit panneau (3) peut être monté,
b) un moyen de détection pour déterminer la direction de déplacement, par rapport à un cadre de référence choisi, dudit rouleau suiveur de chant (4) lorsqu'il est déplacé le long dudit profil de chant,
c) un moyen de sollicitation actif agissant entre ladite structure fixe et ledit rouleau suiveur de chant (4) en réponse à une rétroaction provenant dudit moyen de détection pour agir sur ledit rouleau suiveur de chant (4) afin de commander la direction de sollicitation dudit rouleau suiveur de chant (4) vers ledit panneau (3),
d) dans lequel ledit rouleau suiveur de chant (4) porte un moyen rotatif entraîné (4) qui se met en prise avec le chant (5) dudit panneau (3) pour générer ainsi le mouvement dudit rouleau suiveur de chant (4) le long d'au moins une partie dudit profil,
e) un moyen pour faire avancer la bande de chant entre un rouleau de pression (4) dudit rouleau suiveur de chant (4) et le chant (5) dudit panneau (3), afin d'être fixé sur ledit panneau (3) au niveau de son chant.

29. Appareil de placage de chant selon la revendication 28, dans lequel ledit moyen de sollicitation agit pour solliciter ledit rouleau suiveur de chant (4) avec une composante de direction perpendiculaire par rapport à la direction de mouvement et perpendiculaire par rapport à la normale des surfaces principales (81, 82) dudit panneau (3).

30. Appareil de placage de chant selon l'une quelconque des revendications 28 à 29, dans lequel il y également une petite composante de direction de force dudit moyen de sollicitation sur ledit rouleau suiveur de chant (4) dans la direction de déplacement ou opposée à la direction de déplacement dudit rouleau suiveur de chant (4) le long dudit profil de chant.

31. Appareil de placage de chant selon l'une quelconque des revendications 28 à 30, dans lequel ledit moyen de détection détecte l'angle dudit bras (59) par rapport audit cadre de référence pour fournir ainsi la rétroaction audit moyen de sollicitation de l'orientation angulaire au niveau de ou à proximité du point où le moyen rotatif entraîné est en contact avec ledit profil de chant, pour permettre ainsi de manière appropriée le contrôle de la direction de sollicitation dudit moyen de sollicitation vers ledit rouleau suiveur de chant (13, 4).

32. Procédé de placage de chant, pour plaquer un chant d'un panneau plan (3) en utilisant un appareil de placage de chant selon l'une quelconque des revendications précédentes, comprenant les étapes consistant à :
a) monter un panneau (3) sur une structure de support,
b) placer un rouleau de pression (4) adjacent à un chant dudit panneau (3), et
c) tout en prévoyant qu'une alimentation de matériau de placage de chant se mette en prise avec ledit panneau (3) et soit amenée sur ledit panneau (3) entre le rouleau de pression (4) et ledit panneau (3), prévoir une rotation vers au moins un rouleau de contact de chant rotatif (4) qui est en contact avec le bord (5) plaqué dudit panneau (3) faisant avancer ledit rouleau de pression (4) et ledit rouleau de contact de chant (4) avec son chant le long dudit chant et qui dépose simultanément la bande de chant (5) sur le chant (5) dudit panneau (3),
d) commander un moyen d'application de force dirigée (16, 17) en appliquant une force dirigée sur un rouleau de contact de chant (5), qui est commandé en réponse à l'angle du panneau (3) au niveau dudit rouleau de contact de chant (13, 4), pour presser ainsi ledit rouleau de contact de chant (13, 4) contre le chant (5) dudit panneau (3), et
e) ledit dispositif de modification de bande étant un dispositif d'ébavurage (26).
